# EUROPEAN PATENT SPECIFICATION

(11) **EP 2 767 915 B1**
(45) Date of publication and mention of the grant of the patent: **18.08.2021**
(21) Application number: 14155090.5
(22) Date of filing: 13.02.2014
(51) Int. Cl.: H04W 52/02, G06F 16/242

(54) **A COMMUNICATION METHOD AND A MOBILE TELECOMMUNICATION DEVICE FOR CONTROLLING A SERVER OF A TELECOMMUNICATION SYSTEM**
KOMMUNIKATIONSVERFAHREN UND MOBILTELEKOMMUNIKATIONSVORRICHTUNG ZUR STEUERUNG EINES SERVERS EINES TELEKOMMUNIKATIONSSYSTEMS
PROCÉDÉ DE COMMUNICATION ET DISPOSITIF DE TÉLÉCOMMUNICATION MOBILE POUR COMMANDER UN SERVEUR DE SYSTÈME DE TÉLÉCOMMUNICATION

(30) Priority: 15.02.2013 US 201313768952
(43) Date of publication of application: 20.08.2014
(73) Proprietor: SAP SE, 69190 Walldorf (DE)
(72) Inventor: Clark, Mitchell, 69190 Walldorf (DE); da Silveira, Celso, 69190 Walldorf (DE); Ogando, Julian, 69190 Walldorf (DE)
(74) Representative: Richardt Patentanwälte PartG mbB

(56) References cited:
- US-A1- 2009 177 988
- Dobrin D: "Row and Column - SAP HANA", SAP HANA blog, 5 June 2012 (2012-06-05), XP055238312, Retrieved from the Internet: URL:https://blogs.saphana.com/2012/06/05/r ow-itandit-column/ [retrieved on 2015-12-23]
- ABADI D J ET AL: "Column-stores vs. row-stores: How different are they really?", PROCEEDINGS OF THE 2008 ACM SIGMOD INTERNATIONAL CONFERENCE ON MANAGEMENT OF DATA (SIGMOD '08), 9 June 2008 (2008-06-09), page 967, XP055101840, New York, New York, USA DOI: 10.1145/1376616.1376712 ISBN: 978-1-60-558102-6
- None

## Description

### BACKGROUND INFORMATION

Mobile telecommunication devices such as smartphones, tablets, and smart TVs, have become mainstream computing devices. It is expected that several hundreds of millions of mobile devices will be sold in the next years. Therefore, there is a continuous need to improve the performance of the mobile telecommunication devices. US20090177988A1 discloses a method for generating data queries using a graphical selection tree.

### Summary of the invention

The invention is defined in the appended claims.

It is an objective of embodiments of the invention to provide for a mobile telecommunication device, and a communication method. Said objective is solved by the subject matter of the independent claims. Advantageous embodiments are described in the dependent claims.

In one aspect, the invention relates to a communication method for controlling a server of a telecommunication system, the telecommunication system comprising a mobile telecommunication device being connected to the server via a digital telecommunication network, the server being configured to collect data by receiving data indicative of a plurality of operation parameters of the server from a user of the server and/or from an electrical device that is controlled by the server to acquire the data, wherein the operation parameters are used to control the operation of the server, the mobile telecommunication device comprising a receiving unit, a control unit and an analysis unit, the communication method comprising:
- splitting the plurality of operation parameters into sets of operation parameters;
- storing by the server in a storage device the collected data in one or more tables associated with the sets of operation parameters;
- receiving by the receiving unit a request to access the collected data;
- sending by the control unit a control signal comprising control information via the digital telecommunication network to the server for controlling the server to process the one or more tables and generate a list of the plurality of operation parameters;
- in response to receiving by the receiving unit the list of operation parameters from the server providing by the receiving unit the list of operation parameters;
- receiving by the receiving unit a selection of multiple operation parameters of the list of operation parameters;
- dynamically generating, by the control unit, a query referencing the multiple operation parameters for obtaining distinct values of each of the multiple operation parameters;
- sending, by the control unit, the query to the server for querying the storage device using the query;
- receiving by the receiving unit the distinct values of each of the multiple operation parameters from the server;
- providing by the receiving unit the distinct values of each of the multiple operation parameters;
- receiving by the receiving unit a selection of a subset of values of the distinct values of each of the multiple operation parameters;
- controlling, by the analysis unit, the server to operate in accordance with the subset of values of the distinct values of each of the multiple operation parameters,
wherein the multiple operation parameters comprise a power consumption level, wherein distinct values of the power consumption level comprise power consumption levels of respective distinct components of the server, wherein controlling the server to operate in accordance with the subset of values of the distinct values of each of the multiple operation parameters comprises: dynamically generating a second query referencing the subset of values of the distinct values of each of the multiple operation parameters; sending the second query to the server; receiving measured data of the subset of values of the distinct values of each the multiple operation parameters, adjusting each of the subset of values using the measured data; controlling the server to operate in accordance with the adjusted subset of values wherein the adjusted subset of values comprises a maximum allowed power consumption level under which the server can operate, the distinct values comprising the power consumption level of the display of the server and the power consumption level of the storage of the server, the selected subset of values comprising the power consumption level of the display, wherein the received measured data comprises the average power consumption level of the display for a predefined time period and/or the maximum power consumption level of the display for the predefined time period, wherein the power consumption level of the display is adjusted by decreasing the maximum allowed power consumption level of the display, wherein the server is controlled to operate in accordance with the new maximum allowed power consumption level of the display by reducing the brightness of the display of the server during the predefined time period.

These features may be advantageous as they may save resources in the mobile telecommunication device that would otherwise be required for retrieving and/or storing all data describing the plurality of the operation parameters that are stored in the server. This is particularly important in case of servers used in large sized companies; such servers are characterized or operated using a sheer amount of operation parameters.

Further, the present method may provide an efficient data processing of the plurality of parameters by splitting the processing tasks between the server and the mobile telecommunication device. This may also fasten the data processing since the tasks that require more resources are executed at the server e.g. running on all the data, since the servers are commonly known to have more resources than a mobile device.

Another advantage may reside in the fact that the present method may provide an efficient data storage in the mobile telecommunication device by storing only final data to be analyzed for controlling the operation of the server. In other terms, not all measured values of the plurality of parameters are transmitted and stored but only the part of the measured data relevant for the controlling of the server.

These features may also enhance the security and the protection of the collected data as they don't provide direct access to the collected data. Only part of the collected data is transmitted and stored in the mobile telecommunication device e.g. for direct access by a user of the mobile telecommunication device.

The storage device may be part of the server. Alternatively, the server and the storage device may be implemented in separate machines.

According to one embodiment, the receiving unit comprises a voice channel interface, wherein the request to access the collected data is received as a first voice message via the voice channel interface, wherein a second voice message is generated by the control unit using the first voice message, the second voice message indicating the control information of the control signal, wherein the voice channel interface is configured to establish a voice channel with the server and to transmit control signal as the second voice message, the sending of the control signal comprises establishing a voice channel with the server for transmitting data via the voice channel; and sending the second voice message via the established voice channel.

This may be advantageous as it may further enhance the security aspect of the present invention as a voice message may be less attractive to scrutiny and/or intrusion compared to text messages. For example, Steganography as an information security technique may be used to hide the control information within the voice or audio message, such that the control information does not attract attention to itself as an object of scrutiny. This is in contrast to the text encryption practice or to other transmissions different from the voice message transmission.

For example, the second voice message may comprise the first voice message.

The voice channel may be a transmission channel with a given bandwidth for transmitting voice message from the mobile telecommunication device to the server.

For example, the transmission of a voice message may be a transmission of analogue audio signals from a sender to a receiver using IP packets.

In case of the telecommunication system being a cellular telecommunication system, the voice channel may be a cellular voice channel that is a channel used for transmission of voice messages to the server either directly, or via a base station of the cellular telecommunication system.

For example, the mobile telecommunication device may have a voice interpretation that converts the first voice message into a text message that can be interpreted by the mobile telecommunication device. The server may also have a voice interpretation that converts the second voice message into text message wherein the text message may comprise for example instructions reflecting the control information for controlling the server. For example, the mobile telecommunication device and the server may share the same knowledge of the used information security technique e.g. Steganography that is used to generate the second voice message.

According to one embodiment, the mobile telecommunication device operates in a default security mode, wherein the sending of the control signal and/or sending of the query comprises switching the mobile telecommunication device to operate in an enhanced security mode thereby sending the control signal and/or the query as a voice message to the server.

The query and the control information may be sent in the voice message.

The default security mode refers to a mode with which the mobile telecommunication device is operating before applying the enhanced security mode. The default security mode is different from the enhanced security mode.

According to one embodiment, the telecommunication system comprises a cellular telecommunication system that includes one or more base stations, wherein the control signal is sent via a base station of the one or more base stations.

According to one embodiment, the storage device comprises a volatile memory, wherein the one or more tables are row-based tables; the method further comprising: storing in a column based table the received measured data and displaying the column based table.

The difference between row-based and column-based table is how the data is stored: a row-based table stores data in a sequence of rows. Column-based table stores data in a sequence of columns, by for example, serializing all of the values of a column of a (corresponding) row-based table then the values of the next column, and so on.

According to one embodiment, providing the distinct values of each of the multiple operation parameters comprises displaying the multiple operation parameters in a user interface of the receiving unit.

According to one embodiment, the dynamically generated second query comprises multiple iterative join clauses as a function of the selected subset values.

According to one embodiment, the dynamically generated query comprises multiple iterative join clauses as a function of the selected multiple operation parameters.

According to one embodiment, the mobile telecommunication device comprises a touch screen device having a touch sensitive display screen.

In another aspect the invention relates to a mobile telecommunication device for controlling a server of a telecommunication system, the mobile telecommunication device being connected to the server via a digital telecommunication network of the, the server being configured to collect data by receiving data indicative of a plurality of operation parameters of the server from a user of the server and/or from an electrical device that is controlled by the server to acquire the data, wherein the operation parameters are used to control the operation of the server; the plurality of operation parameters being split into sets of operation parameters; wherein the server stores in a storage device the collected data in one or more tables associated with the sets of operation parameters, the mobile telecommunication device comprises:
- a receiving unit for receiving a request to access the collected data;
- a control unit for sending a control signal comprising control information via the digital telecommunication network to the server for controlling the server to process the one or more tables and generate a list of the plurality of operation parameters; the receiving unit providing the list of operation parameters in response to receiving the list of operation parameters from the server; the receiving unit receiving a selection of multiple operation parameters of the list of operation parameters; the control unit dynamically generating a query referencing the multiple operation parameters for obtaining distinct values of each of the multiple operation parameters; the control unit sending the query to the server for querying the storage device using the query; the receiving unit receiving the distinct values of each of the multiple operation parameters from the server; the receiving unit providing the distinct values of each of the multiple operation parameters; the receiving unit receiving a selection of a subset of values of the distinct values of each of the multiple operation parameters; and

- an analysis unit for controlling the server to operate in accordance with the subset of values of the distinct values of each of the multiple operation parameters, wherein the multiple operation parameters comprise a power consumption level, wherein distinct values of the power consumption level comprise power consumption levels of respective distinct components of the server, wherein controlling the server to operate in accordance with the subset of values of the distinct values of each of the multiple operation parameters comprises: dynamically generating a second query referencing the subset of values of the distinct values of each of the multiple operation parameters; sending the second query to the server; receiving measured data of the subset of values of the distinct values of each the multiple operation parameters, adjusting each of the subset of values using the measured data; controlling the server to operate in accordance with the adjusted subset of values wherein the adjusted subset of values comprises a maximum allowed power consumption level under which the server can operate, the distinct values comprising the power consumption level of the display of the server and the power consumption level of the storage of the server, the selected subset of values comprising the power consumption level of the display, wherein the received measured data comprises the average power consumption level of the display for a predefined time period and/or the maximum power consumption level of the display for the predefined time period, wherein the power consumption level of the display is adjusted by decreasing the maximum allowed power consumption level of the display, wherein the server is controlled to operate in accordance with the new maximum allowed power consumption level of the display by reducing the brightness of the display of the server during the predefined time period.

### BRIEF DESCRIPTION OF THE DRAWINGS

FIG. 1 illustrates an architecture of a system supporting analysis of datasets without predefined dimensions, in accordance with some embodiments;
FIG. 2 illustrates a graphical user interface for analyzing datasets without predefined dimensions;
FIG. 3 illustrates another aspect of a graphical user interface for analyzing datasets without predefined dimensions;
FIG. 4 illustrates another aspect of a graphical user interface for analyzing datasets without predefined dimensions;
FIG. 5 illustrates another aspect of a graphical user interface for analyzing datasets without predefined dimensions;
FIG. 6 illustrates a result report generated from analyzing datasets without predefined dimensions;
FIG. 7 illustrates a method of analyzing datasets without predefined dimensions; and
FIG. 8 illustrates a functional block diagram of an example machine for analyzing datasets without predefined dimensions.

### DETAILED DESCRIPTION

Traditional Business Intelligence (a.k.a., "BI") tools provide capabilities to analyze data sets where the dimensions (a.k.a., "characteristics") are static and can be defined during the data modeling and report creation process (as opposed to query run time). For example, a semantic layer object (e.g., Universe in business object (BOBJ) parlance) and/or a BI data store object (e.g., a table in a Relational Database Management System (RDMS) or a "cube" in an online analytical processing system) can be created that contains predefined dimensions, such as material, customer, country, etc. The Universe can then be used as the basis for a report that provides the ability to analyze a data set along the predefined dimensions. However, traditional BI tools and modeling techniques do not adequately handle analysis of data sets where the dimensions are very dynamic and flexible and can only be defined at run time of the report/query.

In addition, traditional BI tools provide capabilities to analyze data sets where the dimensions are stored as separate individual columns in a RDMS table or multi-dimension cube. However, these tools do not provide the capability to analyze a dataset where the dimensions are stored as separate rows in an online transaction processing (OLTP) table, where the only linkage between the dimensions is via a common key stored with each row.

Current data modeling techniques have several significant limitations. For example, to be able to analyze data quickly, a data store object (e.g., an RDMS table) or online analytical processing (OLAP) cube must be created for the superset of all possible dimensions that may be analyzed, or multiple data store objects must be created for the dimensions that will likely be used during the analysis. Either of these approaches involves replicating data, which requires additional memory for storage.

Another limitation of current data modeling techniques is that a static data store object (along with any downstream data store objects, queries, and reports) must be adjusted and maintained when a new dimension is added or removed from the analysis. This increases the maintenance effort and cost associated with the analysis.

Another limitation of current data modeling techniques is that creating additional data store objects precludes the ability to do real-time analysis against the transactional OLTP tables/data because a static query or pre-defined cube must be updated to reflect a new data store object before analysis of that data store object is possible.

With existing database modeling techniques, the data store object or multidimensional cube in an OLAP system would contain all the predefined dimensions that may be required in the query analysis. The dimensions would be data fields in a data structure. For example, if a database contained information about products, a "Pump" data store object may have dimensions such as "Model," "Type," "Rotation Direction," "Housing Color," etc. A "Car" data store object may have dimensions "Engine," "Exterior Color," "Model," "Year," "Seat Type," etc. The dimensions are predefined in the structure of the data store object (e.g., the dimensions are data fields in the data store object), and therefore, static. If a new dimension needs to be added to or removed from a data store object, the structure of the data store object must be changed, along with any other database item (e.g., data store object, query, etc.) that depends on the modified data store object. In addition, if analysis is required on another data store object with different dimensions, a separate data store object must be created. Once the new data store object has been created, the data contained in the new data store object must be extracted, transformed, and loaded into a data warehouse before it can be analyzed.

The data to be analyzed may be stored in native OLTP tables. Rather than storing the dimensions of a data store object as columns of a table associated with that data store object, the dimensions of a data store object may be stored as separate rows in an OLTP table. The link between different dimensions of the same data store object may be via a common key stored with or within each row. The dimensions for all data store objects may be stored in one OLTP table, and the dimension values for those dimensions may be stored in another OLTP table. To associate a dimension with a value for that dimension, the dimension table and the dimension value table may be joined in an SQL query.

A graphical user interface may be presented to a user. The user may use the GUI to determine the available dimensions that can be used for data analysis, as well as to select specific dimensions to include in analysis reports.

In the following detailed description, reference is made to the accompanying drawings that form a part hereof, and in which is shown by way of illustration examples useful for the understanding of the present subject matter. These examples are described in sufficient detail to enable those skilled in the art to practice them.

The functions or algorithms described herein are implemented in hardware, software or a combination of software and hardware. The software comprises computer executable instructions stored on computer readable media such as memory or other type of storage devices. Further, described functions may correspond to modules, which may be software, hardware, firmware, or any combination thereof. Multiple functions are performed in one or more modules as desired. The software is executed on a digital signal processor, ASIC, microprocessor, or other type of processor operating on a system, such as a personal computer, server, a router, or other device capable of processing data including network interconnection devices.

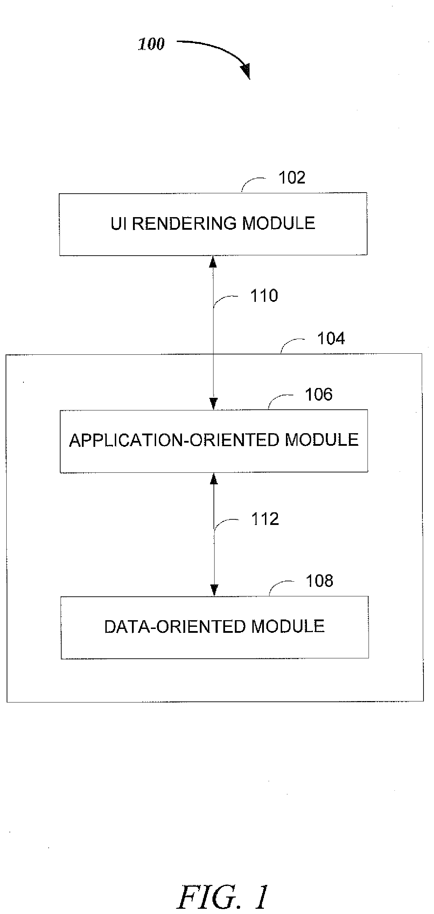

Referring now to the figures, FIG. 1 illustrates an architecture of a system 100 supporting analysis of datasets without predefined dimensions. The database 104 may contain an application-oriented module 106 and a data-oriented module 108. The application-oriented module 106 may contain application logic specific to one or more applications. The data-oriented module 108 may contain data-oriented application logic, as well as SQL queries, views, stored procedures, etc. The UI rendering module 102 may generate data for rendering a user interface (UI) to a user of the system 100.

The UI rendering module 102 is a web browser, such as Internet Explorer®, Firefox®, Chrome™, Safari®, Opera™, etc. The database 104 is an in-memory database, such as SAP HANA. Where the database 104 is an SAP HANA database, the application-oriented module 106 may be SAP HANA Extended Application Services (a.k.a., "XS" or "XS Engine.")

The database 104 and the UI rendering module 102 may communicate 110 with each other via a publicly available protocol or via a proprietary protocol. Examples of publicly available protocols are Hypertext Transfer Protocol (HTTP), Hypertext Transfer Protocol Secure (HTTPS), Transmission Control Protocol (TCP), and Transmission Control Protocol over Internet Protocol (TCP/IP), or any other suitable communications protocol.

Where the database 104 is an in-memory database, the application-oriented module 106 and the data-oriented module 108 may communicate 112 with each other via one or more methods of inter-process communication, such as files, signals, sockets, message queues, pipes, named pipes, semaphores, shared memory, message passing, memory-mapped files, etc.

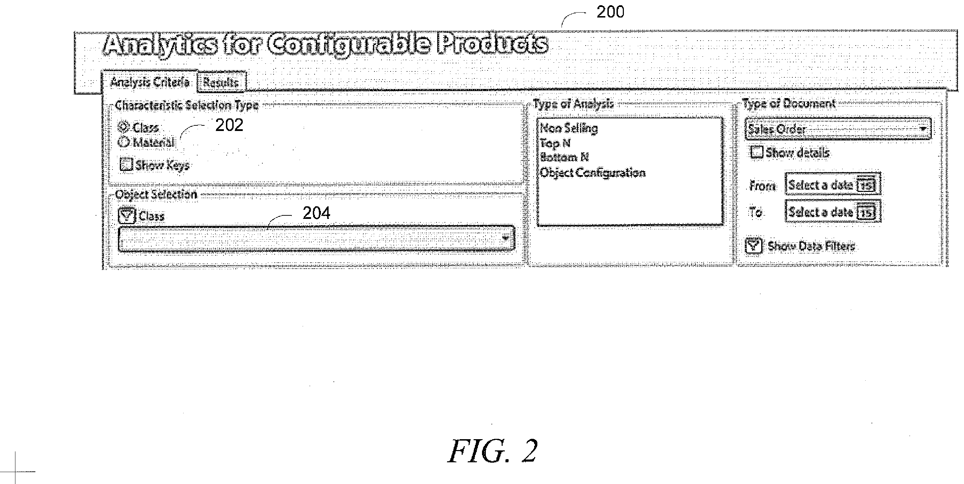

FIG. 2 illustrates a graphical user interface 200 for analyzing datasets without predefined dimensions. The user may begin the data analysis by selecting a characteristic selection type 202. Based on the characteristic selection type 202 selected by the user, the database dynamically generates a SQL query. The purpose of this query is to retrieve data for populating an object selection list 204. If a user selects the "Class" characteristic selection type 202, the database dynamically generates the following SQL query:

```
SELECT DISTINCT CLASS, KSCHL FROM
 "_SYS_BIC"."i010195/QCLASS_CHAR_VALUE"
```

The resulting data returned by the database executing this SQL query may be the following list of classes available in the database, set forth in TABLE 1:

**TABLE 1: Result Set of "CLASS" SQL Query**

| **CLASS** | **KSCHL** |
|---|---|
| EHS_0101_001 | Material Safety Data Sheet Shipping |
| EHS_1022_024 | Dangerous Goods Regulations |
| EHS_1022_029 | Additional Data for Transport |
| EHS_1023_024 | Poisonous by Inhalation (US) |
| EHS_1022_035 | More Information About Classes ... |
| EHS_1022_040 | Activity Limits (Class 7) |
| EHS_1022_041 | Limits of Radioactivity |
| EHS_1022_044 | Activity Limits of Radionuclide |
| EHS_1025_001 | Full UN Packaging Code |
| EHS_1025_003 | Packaging Groups |
| EHS_1025_005 | Single/Outer Packaging |
| EHS_1023_057 | Registration (Company-Specific) |
| EHS_1024_057 | REACH |
| EHS_1025_057 | Substance Volume Tracking |

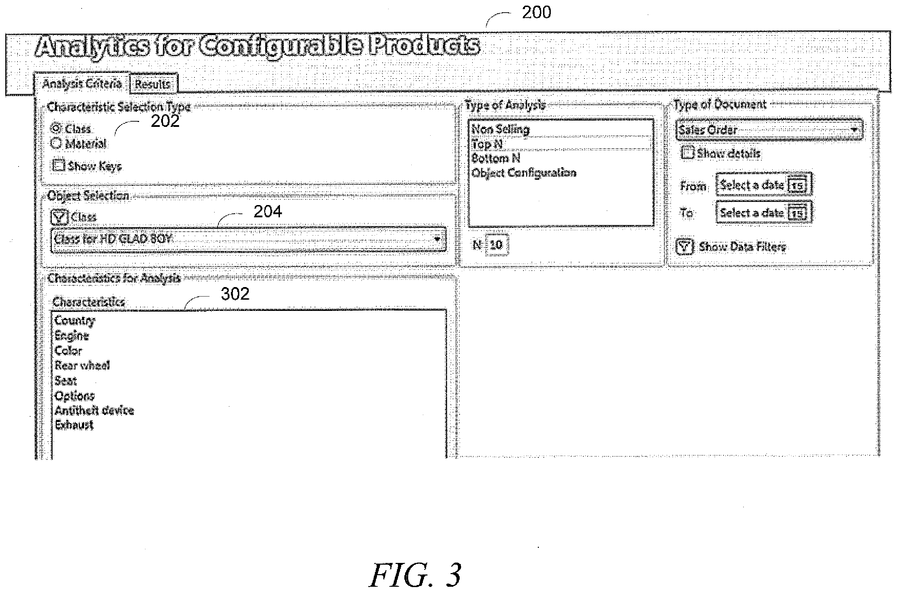

FIG. 3 illustrates another aspect of a graphical user interface 200 for analyzing datasets without predefined dimensions,. After receiving the data resulting from the "CLASS" SQL query, the GUI 200 may then populate an object selection list 204 with the names of the classes returned in the result set. The user may then continue the data analysis by selecting a class listed in the list of class names in object selection list 204. Based on the class selected by the user, the database dynamically generates a SQL query. The purpose of this query is to populate a selection list 302 of the available characteristics for the selected class. If a user selects "Class for HD GLAD BOY," which has an ID of "HD-000" as the class in object selection list 204, the database dynamically generates the following SQL query:

```
SELECT DISTINCT ATINN, ATBEZ FROM
 "_SYS_BIC"."i010195/QCLASS_CHAR_VALUE" WHERE CLASS = 'HD-000'
```

The resulting data returned by the database executing this SQL query may be the following list of characteristics in the database for "Class for HD GLAD BOY," set forth in TABLE 2:

**TABLE 2: Result Set of "Class for HD GLAD BOY" Query**

| **ATINN** | **ATBEZ** |
|---|---|
| 0000000113 | Country |
| 0000000114 | Engine |
| 0000000115 | Color |
| 0000000116 | Rear wheel |
| 0000000117 | Seat |
| 0000000118 | Options |
| 0000000124 | Antitheft device |
| 0000000991 | Exhaust |

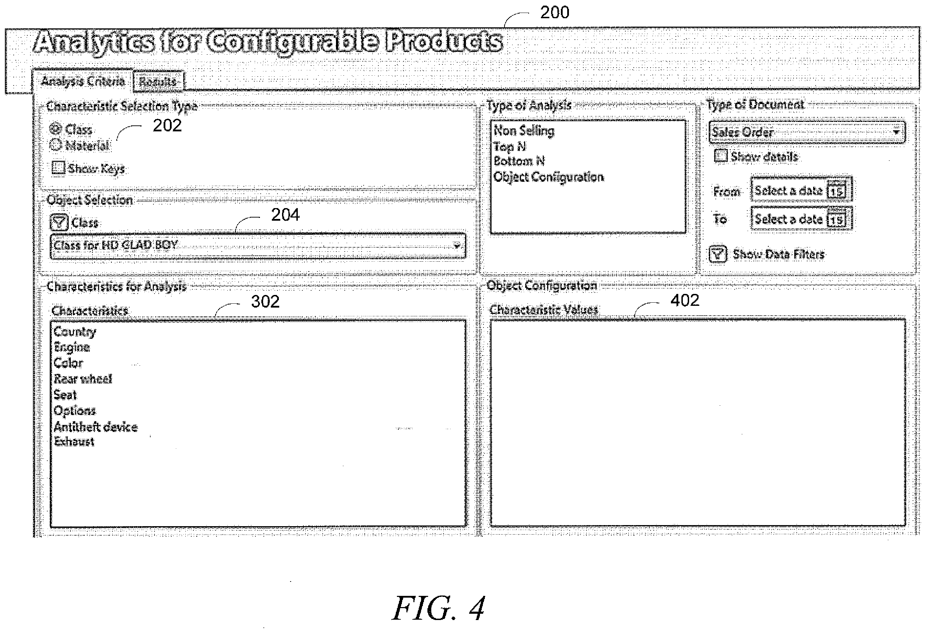

FIG. 4 illustrates another aspect of a graphical user interface 200 for analyzing datasets without predefined dimensions. After receiving the data resulting from the "Class for HD GLAD BOY" query, the GUI 200 may populate the list of characteristics for analysis 302 with the names of the characteristics available for the class selected in object selection list 204. The user may then continue the data analysis by selecting one or more characteristics listed in the list of characteristics for analysis 302. Based on the characteristic(s) selected by the user, the database dynamically generates a SQL query. The purpose of this query is to populate a selection list of the available characteristic values 402 for the selected characteristic(s). If a user selects the characteristics "Country" and "Color," which have keys "0000000113" and "0000000115" respectively, the database dynamically generates the following SQL query:

```
SELECT DISTINCT "ATBEZ", "ATINN", "ATZHL", "ATWTB" FROM
 "_SYS_BIC"."i010195/QCLASS_CHAR_VALUE_SOLD_UNSOLD" WHERE
 "ATINN" IN ('0000000113','0000000115')
```

The resulting data returned by the database executing this SQL query may be the following list of characteristic values in the database for characteristics "Country" and "Color" of "Class for HD GLAD BOY," set forth in TABLE 3:

**TABLE 3: Result Set of "Country & Color for Class for HD GLAD BOY" Query**

| **ATBEZ** | **ATINN** | **ATZHL** | **ATWTB** |
|---|---|---|---|
| Country | 0000000113 | 0003 | 49 States |
| Color | 0000000115 | 0002 | Black |
| Country | 0000000113 | 0002 | California |
| Country | 0000000113 | 0001 | International |
| Color | 0000000115 | 0003 | Red |
| Color | 0000000115 | 0001 | Silver |

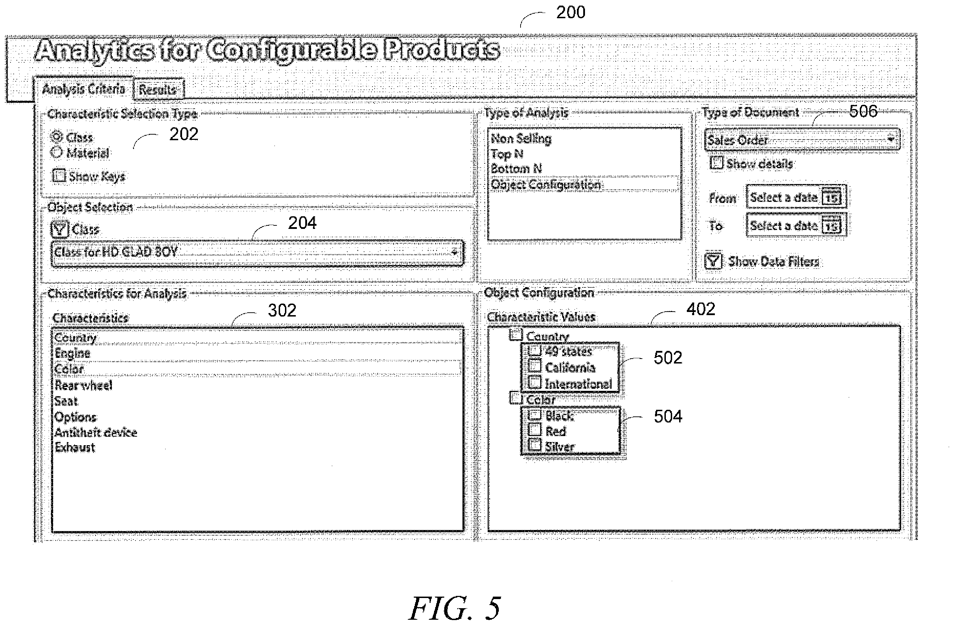

FIG. 5 illustrates another aspect of a graphical user interface 200 for analyzing datasets without predefined dimensions. After receiving the data resulting from the "Country & Color for Class for HD GLAD BOY" query, the GUI 200 may then populate a characteristic values selection list 402 with the names of the characteristic values available for the selected characteristic(s) in the list of characteristics for analysis 302. The user may then continue the data analysis by selecting one or more characteristic values 502, 504 listed in the list of characteristic values 402 available for the selected characteristic(s), as well as selecting the type of document 506 to retrieve. Based on the characteristic value(s) 502, 504 selected by the user and the type of document selected by the user, a SQL query is dynamically created. The purpose of this query is to perform the analysis specified in the document type selected on the characteristic value(s) 502, 504 selected. If a user selects the characteristic value "California" for characteristic "Country," characteristic values "Black" and "Red" for characteristic "Color," and "Sales Order" as the type of document, the database dynamically generates the following SQL query:

```
SELECT A.ATWTB AS "Country", B.ATWTB AS "Color",
 SUM(A.KWMENG) AS "Quantity"
 FROM "_SYS_BIC"."i010195/CA_MATNR_CHARVAL_SOLD" AS A,
 "_SYS_BIC"."i010195/CA_MATNR_CHARVAL_SOLD" AS B
 WHERE A.VBELN =B.VBELN
 AND A.ATINN ='0000000113' AND A.ATZHL IN(0002)
 AND B.ATINN ='0000000115' AND B.ATZHL IN(0002,0003)
 GROUP BY A.ATWTB, B.ATWTB
```

The SQL query generated may include multiple iterative join and/or selection clauses against the same table or view, depending upon the number of characteristics selected by the user in the previous selection steps. Each characteristic selected for analysis may be included in at least one join iteration for that characteristic. For example, if a user selects eight different characteristics in the previous steps, then eight join iterations may be generated in the SQL query. The user selected two characteristics ("Country" and "Color") for analysis; thus, one selection via the view ("_SYS_BIC"."i010195/CA_MATNR_CHARVAL_SOLD") with characteristic "Country" and another selection against the same view with characteristic "Color" were generated.

The resulting data returned by the database executing this SQL query may be the following data, set forth in TABLE 4:

**TABLE 4: Result Set of Sales Order query**

| **Country** | **Color** | **Quantity** |
|---|---|---|
| California | Black | 20 |
| California | Red | 20 |

This result shows that 20 Black HD Glad Boy motorcycles were sold in California, and 20 Red HD Glad Boy motorcycles were sold in California. The characteristics/columns (both the number of resulting characteristics/columns and the characteristic name itself) included in this output are dependent upon the characteristics selected by the user in the previous steps.

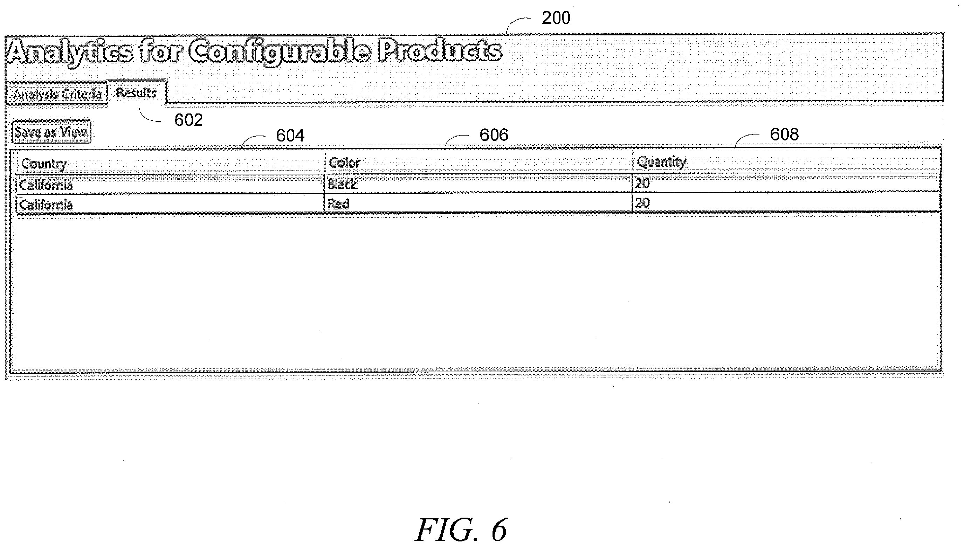

FIG. 6 illustrates a result report generated from analyzing datasets without predefined dimensions. After receiving the data resulting from the "Sales Order" query, the GUI 200 may then populate a results report 602, which may display as a grid the data returned from execution of the "Sales Order" query. Each selected characteristic may be displayed in its own column. The user selected the characteristics "Country" and "Color" for analysis; thus, the grid contains a Country column 604 and a Color column 606. The grid also contains a Quantity column 608, which was included in the dynamically generated SQL query because of the selected document type 506.

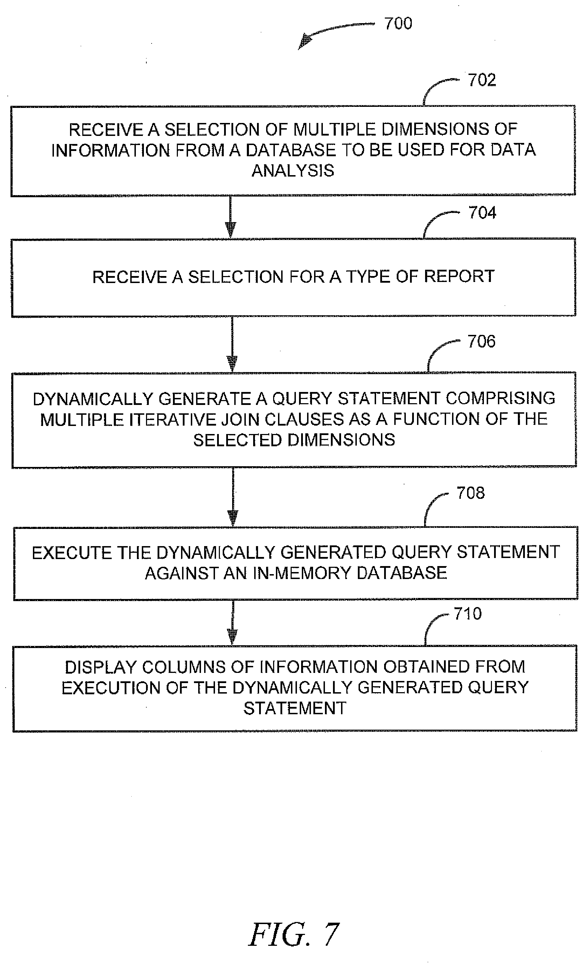

FIG. 7 illustrates a method 700 of analyzing datasets without predefined dimensions. A selection of multiple dimensions of information from a database to be used for data analysis is received 702. A selection for a type of report is then received 704. In some embodiments, a query statement comprising multiple iterative join clauses as a function of the selected dimensions is then dynamically generated 706. The dynamically generated query statement is then executed against an in-memory database 708. The columns of information obtained from execution of the dynamically generated query statement are then displayed 710.

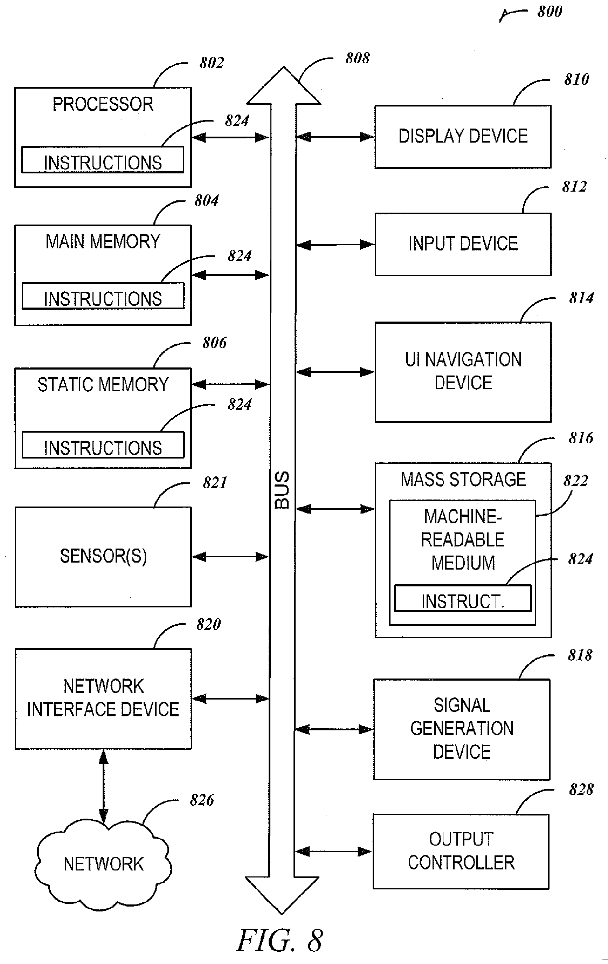

Figure 8 illustrates a functional block diagram of an example machine 800, upon which any one or more of the techniques (e.g., methodologies) discussed herein can perform. The machine 800 can operate as a standalone device or can be connected (e.g., networked) to other machines. In a networked deployment, the machine 800 can operate in the capacity of a server machine, a client machine, or both in server-client network environments. In an example, the machine 800 can act as a peer machine in peer-to-peer (P2P) (or other distributed) network environment. The machine 800 can be a personal computer (PC), a tablet PC, a set-top box (STB), a Personal Digital Assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, can include, or can operate on, logic or a number of components, modules, or mechanisms. Modules are tangible entities capable of performing specified operations and can be configured or arranged in a certain manner. In an example, circuits can be arranged (e.g., internally or with respect to external entities such as other circuits) in a specified manner as a module. In an example, the whole or part of one or more computer systems (e.g., a standalone, client or server computer system) or one or more hardware processors can be configured by firmware or software (e.g., instructions, an application portion, or an application) as a module that operates to perform specified operations. In an example, the software can reside (1) on a non-transitory machine-readable medium or (2) in a transmission signal. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor can be configured as respective different modules at different times. Software can accordingly configure a hardware processor, for example, to constitute a particular module at one instance of time and to constitute a different module at a different instance of time.

Machine (e.g., computer system) 800 can include a hardware processor 802 (e.g., a central processing unit (CPU), a graphics processing unit (GPU), a hardware processor core, or any combination thereof), a main memory 804 and a static memory 806, some or all of which can communicate with each other via a bus 808. The machine 800 can further include a display unit 810, an alphanumeric input device 812 (e.g., a keyboard), and a user interface (Ul) navigation device 814 (e.g., a mouse). In an example, the display unit 810, input device 812 and UI navigation device 814 can be a touch screen display. The machine 800 can additionally include a storage device (e.g., drive unit) 816, a signal generation device 818 (e.g., a speaker), a network interface device 820, and one or more sensors 821, such as a global positioning system (GPS) sensor, compass, accelerometer, or other sensor. The machine 800 can include an output controller 828, such as a serial (e.g., universal serial bus (USB), parallel, or other wired or wireless (e.g., infrared (IR)) connection to communicate or control one or more peripheral devices (e.g., a printer, card reader, etc.).

The storage device 816 can include a machine-readable medium 822 on which is stored one or more sets of data structures or instructions 824 (e.g., software) embodying or utilized by any one or more of the techniques or functions described herein. The instructions 824 can also reside, completely or at least partially, within the main memory 804, within static memory 806, or within the hardware processor 802 during execution thereof by the machine 800. In an example, one or any combination of the hardware processor 802, the main memory 804, the static memory 806, or the storage device 816 can constitute machine-readable media.

While the machine-readable medium 822 is illustrated as a single medium, the term "machine-readable medium" can include a single medium or multiple media (e.g., a centralized or distributed database, and/or associated caches and servers) that configured to store the one or more instructions 824.

The term "machine-readable medium" can include any tangible medium that is capable of storing, encoding, or carrying instructions for execution by the machine 800 and that cause the machine 800 to perform any one or more of the techniques of the present disclosure, or that is capable of storing, encoding or carrying data structures used by or associated with such instructions. Non-limiting machine-readable medium examples can include solid-state memories, and optical and magnetic media. Specific examples of machine-readable media can include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 824 can further be transmitted or received over a communications network 826 using a transmission medium via the network interface device 820 utilizing any one of a number of transfer protocols (e.g., frame relay, internet protocol (IP), transmission control protocol (TCP), user datagram protocol (UDP), hypertext transfer protocol (HTTP), etc.). Example communication networks can include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), peer-to-peer (P2P) networks, among others. In an example, the network interface device 820 can include one or more physical jacks (e.g., Ethernet, coaxial, or phone jacks) or one or more antennas to connect to the communications network 826. In an example, the network interface device 820 can include a plurality of antennas to communicate wirelessly using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 800, and includes digital or analog communications signals or other intangible medium to facilitate communication of such software.

Although example machine 800 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radiofrequency integrated circuits (RFICs) and combinations of various hardware and logic circuitry for performing at least the functions described herein. The functional elements of system 800 may refer to one or more processes operating on one or more processing elements.

Examples may be implemented in one or a combination of hardware, firmware and software. Examples may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. System 800 may include one or more processors and may be configured with instructions stored on a computer-readable storage device.

The flowchart and block diagrams in the Figures illustrate the architecture, functionality, and operation of possible implementations of systems, methods and computer program products according to various aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

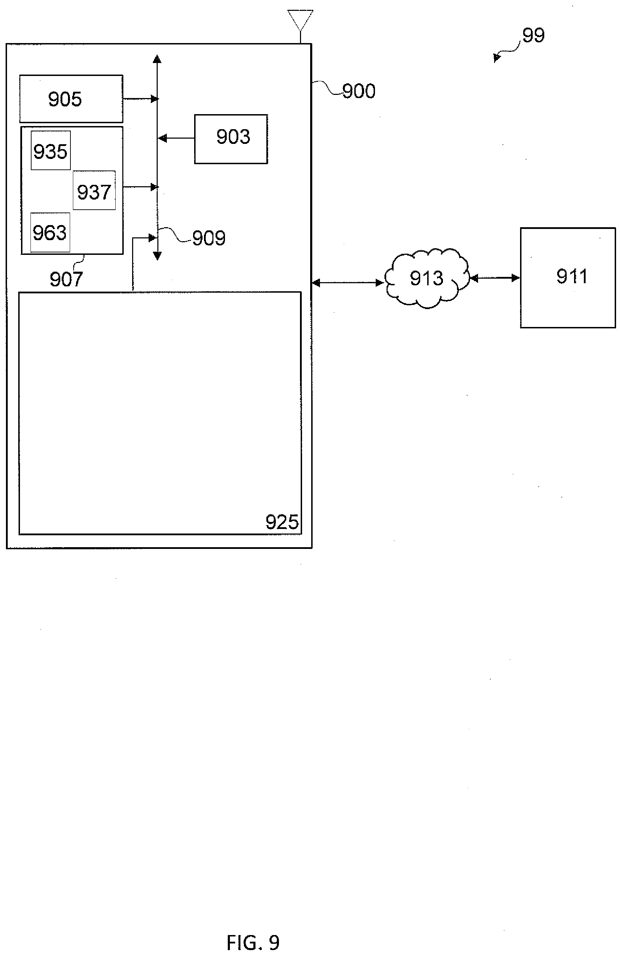

Fig. 9 shows an exemplary mobile telecommunication device 900 in a telecommunication system 99. The telecommunication system may comprise for example a cellular telecommunication system. The mobile telecommunication device 900 may comprise a processor 903, a transceiver 905, a memory 907 each capable of communicating with one or more components of the mobile telecommunication device 900. For example, all components are coupled to a bidirectional system bus 909.

The processor 903 may be a microprocessor, a single core processor, a multicore processor or the like. The processor 903 may control the operation of the mobile telecommunication device 900. The transceiver 905 can be implemented as a transmitting and receiving component of the mobile telecommunication device 900.

The mobile telecommunication device 900 may further comprise a display device 925 which displays characters and images and the like. For example, the display device 925 may be a touch sensitive display screen.

The mobile telecommunication device 900 may be connected to a server 911 through a network 913 such as a cellular digital system telecommunication network. For example, the mobile telecommunication device 900 may be directly connected to the server 911 or connected to the server 911 via a base station (not shown) of the telecommunication system being a cellular telecommunication system. For example, using the transceiver 905, the mobile telecommunication device 900 may exchange data with the server 911 via the network 913 e.g. being the mobile cellular digital telecommunications network.

Memory 907 is configured to store a plurality of applications that are executable on the processor 903. Memory 907 is further configured to store a receiving unit 933, a control unit 935 and an analysis unit 937.

The server 911 may be controlled to collect data indicative of a plurality of operation parameters of the server, wherein the operation parameters are used to control the operation of the server. The collection of data may comprise receiving the data from a user of the server 911 and/or receiving data from an electrical device that is controlled by the server 911 to acquire the data. The electrical device may be for example a measurement instrument for measuring e.g. the temperature, speed of cars etc. The collection of data may comprise, the server 911 providing data indicative of the plurality of operation parameters such as for example IP-address of the server, port, protocol data communication, Server Software running on the server, Maximum Message Size for messaging, and the like.

In one example which is not part of the invention, the operation of the server 911 comprises generating data to be transmitted to the mobile telecommunication device. Thus, controlling the operation of the server 911 may comprise, for example, determining which data to be generated by the server 911 and/or which data to be transmitted to the mobile telecommunication device 900. The operation parameters (e.g. dimensions or characteristics as described above) may comprise for example multiple descriptive data or attributes that characterize user data stored in the server 911. For example, as described above "Pump" may be described by operation parameters such as "Model," "Type," "Rotation Direction," "Housing Color," etc. A "Car" may be described by operation parameters such as "Engine," "Exterior Color," "Model," "Year," "Seat Type," etc. For example, by selecting the "model" and "year" operation parameters, information (i.e. measured data) such as the number of defect cars (or the average amount of petrol consumption) may be requested for a given model of the car used between 2010 and 2012.

According to the invention, the operation parameters comprise a power consumption level. The power consumption level may be the power consumption level of components of the server 911 e.g. a power consumption level of a display of the server 911, or a power consumption level related to a storage of the server 911. The power consumption level related to the storage of the server may be the power consumption level related to I/O activities to the storage of the server 911 e.g. for transmitting and receiving data from the mobile telecommunication device.

The plurality of operation parameters are split into sets of operation parameters. The server 911 may store in a storage device the collected data in one or more tables associated with the one or more set of operation parameters. The storage device may be a volatile memory of the server 911 (e.g. main memory of the server 911). This may fasten the data processing. The one or more tables may be row-based tables. The split of parameters may depend for example on how frequent the data associated with a given parameter is used. For example, a table is created for the most frequently used parameters and another table may be created for the less frequently used parameters. The usage frequency may be compared to a predefined frequency threshold value to the determine if a parameter is most frequently or less frequently used. This splitting may be advantageous as it may provide a flexibility for storing the tables such that for example storing the most frequently used table in a fast accessed storage e.g. a volatile memory and storing the less frequently used table in a normal hard disk storage. This may further increase the speed of the overall process of the present method.

The receiving unit 933 may receive (e.g. from a user of the mobile telecommunication device) a request to access the collected data. This request may be received as a first voice message (or in the first voice message) via a voice channel interface of the receiving unit 933. In another example, the request may be received via an input of data via a user interface of the receiving unit. The voice channel interface and/or the user interface may be generated when of the receiving unit is executed (or invoked).

The control unit 935 may thus send a control signal comprising control information via the digital telecommunication network to the server 911 for controlling the server 911 to process the one or more tables and generate a list of the plurality of operation parameters. For example, the sending of the control signal may comprise sending a second voice message (as the control signal) via a voice channel. The voice channel is established with the server 911 by the voice channel interface for transmitting voice data. The second voice message is generated by the control unit 935 using the first voice message. The second voice message indicates the control information of the control signal.

In response to receiving by the receiving unit 933 the list of operation parameters from the server 911, the receiving unit 933 provides the list of operation parameters e.g. by displaying them on the user interface.

The receiving unit 933 may receive a selection (e.g. from the user of the mobile telecommunication device) of multiple operation parameters of the list of operation parameters. Thus, a query referencing the multiple operation parameters is dynamically generated by the control unit 935 for obtaining distinct values of each of the multiple operation parameters, and the query is sent to the server 911 for querying the storage device using the query. In an example which is not part of the invention, distinct values may be red and black as the color of a car (i.e. although there are multiple red cars used only one value is returned that characterizes the red as a distinct color). In the invention, the distinct values comprise the power consumption level of the display (i.e. not all measured values of the power consumption but just the descriptive information that indicates that power consumption level of a display is a distinct value of the parameter: power consumption level.)

The dynamically generated query comprises multiple iterative join clauses (as shown above with the SQL query statement described with reference to Fig. 4 where operation parameters "color" and "country" are selected) as a function of the selected multiple operation parameters.

The receiving unit 933 may receive the distinct values of each of the multiple operation parameters from the server 911 and provide the distinct values of each of the multiple operation parameters, e.g. by displaying them on the user interface.

The receiving unit 933 may receive (e.g. form the user of the mobile telecommunication device) a selection of a subset of values of the distinct values of each of the multiple operation parameters. In an example which is not part of the invention, only red cars may be selected for controlling the server 911 to provide data associated with the red cars. In the invention, only the power consumption level of the display of the server 911 may be selected for controlling the server 911.

The analysis unit 935 may control the server 911 to operate in accordance with the subset of values of the distinct values of each of the multiple operation parameters.

In the invention, the controlling is done by generating a second query referencing the subset of values of the distinct values of each the multiple operation parameters; sending the second query to the server; receiving measured data of the subset of values of the distinct values of each of the multiple operation parameters, adjusting each of the subset of values using the measured data, controlling the server to operate in accordance with the adjusted subset of values by adjusting the selected power consumption level of the display device by requiring that the power consumption level of the display does not exceeds a predefined threshold value. In the invention, the server 911 may be controlled by using less power consuming colors in the display and/or lowering brightness level of the display.

In an example which is not part of the invention, the controlling may comprise dynamically generating a second query referencing the subset of values of the distinct values of each the multiple operation parameters; sending the second query to the server; receiving measured data of the subset of values of the distinct values of each of the multiple operation parameters. The second query as shown above with the SQL query statement described with reference to Fig. 5 where the subset values red and black of the distinct values of the parameter "color" and the subset value "California" of the distinct values of the parameter "country" are selected. (It has to be noted that a user may select more than the two operational parameters (e.g. color and country). For example, if the user selects 50 parameters then the resulting query SELECT statement would contain 50 interactive joins).

## Claims

1. A communication method for controlling a server (911) of a telecommunication system (99), the telecommunication system (99) comprising a mobile telecommunication device (900) being connected to the server (911) via a digital telecommunication network (913), the server being configured to collect data by receiving data indicative of a plurality of operation parameters of the server from a user of the server and/or from an electrical device that is controlled by the server to acquire the data, wherein the operation parameters are used to control the operation of the server, the mobile telecommunication device (900) comprising a receiving unit (933), a control unit (935) and an analysis unit (937), the communication method comprising:
- splitting the plurality of operation parameters into sets of operation parameters;
- storing by the server in a storage device the collected data in one or more tables associated with the sets of operation parameters;
- receiving by the receiving unit a request to access the collected data;
- sending by the control unit a control signal comprising control information via the digital telecommunication network to the server for controlling the server to process the one or more tables and generate a list of the plurality of operation parameters;
- in response to receiving by the receiving unit the list of operation parameters from the server providing by the receiving unit the list of operation parameters;
- receiving by the receiving unit a selection of multiple operation parameters of the list of operation parameters;
- dynamically generating, by the control unit, a query referencing the multiple operation parameters for obtaining distinct values of each of the multiple operation parameters;
- sending, by the control unit, the query to the server for querying the storage device using the query;
- receiving by the receiving unit the distinct values of each of the multiple operation parameters from the server;
- providing by the receiving unit the distinct values of each of the multiple operation parameters;
- receiving by the receiving unit a selection of a subset of values of the distinct values of each of the multiple operation parameters;
- controlling, by the analysis unit, the server to operate in accordance with the subset of values of the distinct values of each of the multiple operation parameters,
wherein the multiple operation parameters comprise a power consumption level, wherein distinct values of the power consumption level comprise power consumption levels of respective distinct components of the server, wherein controlling the server to operate in accordance with the subset of values of the distinct values of each of the multiple operation parameters comprises: dynamically generating a second query referencing the subset of values of the distinct values of each of the multiple operation parameters; sending the second query to the server; receiving measured data of the subset of values of the distinct values of each the multiple operation parameters, adjusting each of the subset of values using the measured data; controlling the server to operate in accordance with the adjusted subset of values wherein the adjusted subset of values comprises a maximum allowed power consumption level under which the server can operate, the distinct values comprising the power consumption level of the display of the server and the power consumption level of the storage of the server, the selected subset of values comprising the power consumption level of the display, wherein the received measured data comprises the average power consumption level of the display for a predefined time period and/or the maximum power consumption level of the display for the predefined time period, wherein the power consumption level of the display is adjusted by decreasing the maximum allowed power consumption level of the display, wherein the server is controlled to operate in accordance with the new maximum allowed power consumption level of the display by reducing the brightness of the display of the server during the predefined time period.

2. The method of any of previous claims, wherein the receiving unit comprises a voice channel interface, wherein the request to access the collected data is received as a first voice message via the voice channel interface, wherein a second voice message is generated by the control unit using the first voice message, the second voice message indicating the control information of the control signal, wherein the voice channel interface is configured to establish a voice channel with the server, the sending of the control signal comprises sending the second voice message via the established voice channel.

3. The method of any of previous claims, wherein the telecommunication system comprises a cellular telecommunication system that includes one or more base stations, wherein the control signal is sent via a base station of the one or more base stations.

4. The method of any of previous claims, wherein the storage device comprises a volatile memory, wherein the one or more tables are row-based tables; the method further comprising: storing in a column based table the received measured data and displaying the column based table.

5. The method of any of previous claims, wherein providing the distinct values of each of the multiple operation parameters comprises displaying the multiple operation parameters in a user interface of the receiving unit.

6. The method of any of previous claims, wherein the dynamically generated second query comprises multiple iterative join clauses as a function of the selected subset values.

7. The method of any of previous claims, wherein the dynamically generated query comprises multiple iterative join clauses as a function of the selected multiple operation parameters.

8. The method of any or previous claims, wherein the mobile telecommunication device comprises a touch screen device having a touch sensitive display screen.

9. The method of claim 1, the mobile telecommunication device operating in a default security mode, wherein the sending of the control signal and/or sending of the query comprises switching the mobile telecommunication device to operate in an enhanced security mode thereby sending the control signal and/or the query as a voice message to the server.

10. A mobile telecommunication device for controlling a server of a telecommunication system, the mobile telecommunication device being connected to the server via a digital telecommunication network of the , the server being configured to collect data by receiving data indicative of a plurality of operation parameters of the server from a user of the server and/or from an electrical device that is controlled by the server to acquire the data, wherein the operation parameters are used to control the operation of the server; the plurality of operation parameters being split into sets of operation parameters; wherein the server stores in a storage device the collected data in one or more tables associated with the sets of operation parameters, the mobile telecommunication device comprises:
- a receiving unit for receiving a request to access the collected data;
- a control unit for sending a control signal comprising control information via the digital telecommunication network to the server for controlling the server to process the one or more tables and generate a list of the plurality of operation parameters; the receiving unit providing the list of operation parameters in response to receiving the list of operation parameters from the server; the receiving unit receiving a selection of multiple operation parameters of the list of operation parameters; the control unit dynamically generating a query referencing the multiple operation parameters for obtaining distinct values of each of the multiple operation parameters; the control unit sending the query to the server for querying the storage device using the query; the receiving unit receiving the distinct values of each of the multiple operation parameters from the server; the receiving unit providing the distinct values of each of the multiple operation parameters; the receiving unit receiving a selection of a subset of values of the distinct values of each of the multiple operation parameters; and
- an analysis unit for controlling the server to operate in accordance with the subset of values of the distinct values of each of the multiple operation parameters, wherein the multiple operation parameters comprise a power consumption level, wherein distinct values of the power consumption level comprise power consumption levels of respective distinct components of the server, wherein controlling the server to operate in accordance with the subset of values of the distinct values of each of the multiple operation parameters comprises: dynamically generating a second query referencing the subset of values of the distinct values of each of the multiple operation parameters; sending the second query to the server; receiving measured data of the subset of values of the distinct values of each the multiple operation parameters, adjusting each of the subset of values using the measured data; controlling the server to operate in accordance with the adjusted subset of values wherein the adjusted subset of values comprises a maximum allowed power consumption level under which the server can operate, the distinct values comprising the power consumption level of the display of the server and the power consumption level of the storage of the server, the selected subset of values comprising the power consumption level of the display, wherein the received measured data comprises the average power consumption level of the display for a predefined time period and/or the maximum power consumption level of the display for the predefined time period, wherein the power consumption level of the display is adjusted by decreasing the maximum allowed power consumption level of the display, wherein the server is controlled to operate in accordance with the new maximum allowed power consumption level of the display by reducing the brightness of the display of the server during the predefined time period.

## Patentansprüche

1. Kommunikationsverfahren zur Steuerung eines Servers (911) eines Telekommunikationssystems (99), wobei das Telekommunikationssystem (99) eine über ein digitales Telekommunikationsnetzwerk (913) mit dem Server (911) verbundene mobile Telekommunikationsvorrichtung (900) umfasst, wobei der Server dazu ausgelegt ist, Daten durch Empfangen von Daten, die für eine Vielzahl von Betriebsparametern des Servers bezeichnend sind, von einem Benutzer des Servers und/oder von einer elektrischen Vorrichtung, die von dem Server gesteuert wird, um die Daten zu erfassen, zu sammeln, wobei die Betriebsparameter genutzt werden, um den Betrieb des Servers zu steuern, wobei die mobile Telekommunikationsvorrichtung (900) eine Empfangseinheit (933), eine Steuereinheit (935) und eine Analyseeinheit (937) umfasst, wobei das Kommunikationsverfahren umfasst:
- Aufteilen der Vielzahl von Betriebsparametern in Gruppen von Betriebsparametern;
- Speichern der gesammelten Daten durch den Server in einer Speichervorrichtung in einer oder mehreren Tabellen, die den Gruppen von Betriebsparametern zugeordnet sind;
- Empfangen, durch die Empfangseinheit, einer Anfrage, auf die gesammelten Daten zuzugreifen;
- Senden, durch die Steuereinheit, eines Steuerinformationen umfassenden Steuersignals über das digitale Telekommunikationsnetzwerk an den Server, um den Server so zu steuern, dass er die eine oder mehrere Tabellen verarbeitet und eine Liste der Vielzahl von Betriebsparametern erzeugt;
- in Reaktion auf das Empfangen, durch die Empfangseinheit, der Liste von Betriebsparametern von dem Server Bereitstellen, durch die Empfangseinheit, der Liste von Betriebsparametern;
- Empfangen, durch die Empfangseinheit, einer Auswahl mehrerer Betriebsparameter aus der Liste von Betriebsparametern;
- dynamisches Erzeugen, durch die Steuereinheit, einer die mehreren Betriebsparameter referenzierenden Abfrage, um zu jedem der mehreren Betriebsparameter einzelne Werte zu erhalten;
- Senden, durch die Steuereinheit, der Abfrage an den Server, um die Speichervorrichtung unter Verwendung der Abfrage abzufragen;
- Empfangen, durch die Empfangseinheit, der einzelnen Werte zu jedem der mehreren Betriebsparameter von dem Server;
- Bereitstellen, durch die Empfangseinheit, der einzelnen Werte zu jedem der mehreren Betriebsparameter;
- Empfangen, durch die Empfangseinheit, einer Auswahl einer Teilgruppe von Werten der einzelnen Werte zu jedem der mehreren Betriebsparameter;
- Steuern, durch die Analyseeinheit, des Servers, damit dieser entsprechend der Teilgruppe von Werten der einzelnen Werte zu jedem der mehreren Betriebsparameter arbeitet,
wobei die mehreren Betriebsparameter ein Energieverbrauchsniveau umfassen, wobei einzelne Werte des Energieverbrauchsniveaus Energieverbrauchsniveaus entsprechender einzelner Komponenten des Servers umfassen, wobei das Steuern des Servers, damit dieser entsprechend der Teilgruppe von Werten der einzelnen Werte jedes der mehreren Betriebsparameter arbeitet, umfasst: dynamisches Erzeugen einer die Teilgruppe von Werten der einzelnen Werte jedes der mehreren Betriebsparameter referenzierenden zweiten Abfrage; Senden der zweiten Abfrage an den Server; Empfangen gemessener Daten der Teilgruppe von Werten der einzelnen Werte zu jedem der mehreren Betriebsparameter, wobei jeder aus der Teilgruppe von Werten unter Verwendung der gemessenen Daten angepasst wird; Steuern des Servers, damit dieser entsprechend der angepassten Teilgruppe von Werten arbeitet, wobei die angepasste Teilgruppe von Werten ein maximal zulässiges Energieverbrauchsniveau, bei dem der Server arbeiten kann, umfasst, wobei die einzelnen Werte das Energieverbrauchsniveau der Anzeige des Servers und das Energieverbrauchsniveau des Speichers des Servers umfassen, wobei die ausgewählte Teilgruppe von Werten das Energieverbrauchsniveau der Anzeige umfasst, wobei die empfangenen gemessenen Daten das durchschnittliche Energieverbrauchsniveau der Anzeige für einen vordefinierten Zeitraum und/oder das maximale Energieverbrauchsniveau der Anzeige für den vordefinierten Zeitraum umfassen, wobei das Energieverbrauchsniveau der Anzeige durch Verringern des maximal zulässigen Energieverbrauchsniveaus der Anzeige angepasst wird, wobei der Server gesteuert wird, um entsprechend dem neuen maximal zulässigen Energieverbrauchsniveau der Anzeige durch Reduzieren der Helligkeit der Anzeige des Servers während des vordefinierten Zeitraums zu arbeiten.

2. Verfahren nach einem der vorangehenden Ansprüche, wobei die Empfangseinheit eine Sprachkanalschnittstelle umfasst, wobei die Anfrage nach Zugriff auf die gesammelten Daten als eine erste Sprachnachricht über die Sprachkanalschnittstelle empfangen wird, wobei eine zweite Sprachnachricht von der Steuereinheit unter Verwendung der ersten Sprachnachricht erzeugt wird, wobei die zweite Sprachnachricht die Steuerinformationen des Steuersignals angibt, wobei die Sprachkanalschnittstelle dazu ausgelegt ist, einen Sprachkanal mit dem Server aufzubauen, wobei das Senden des Steuersignals ein Senden der zweiten Sprachnachricht über den aufgebauten Sprachkanal umfasst.

3. Verfahren nach einem der vorangehenden Ansprüche, wobei das Telekommunikationssystem ein zellulares Telekommunikationssystem umfasst, das eine oder mehrere Basisstationen umfasst, wobei das Steuersignal über eine Basisstation der einen oder mehreren Basisstationen gesendet wird.

4. Verfahren nach einem der vorangehenden Ansprüche, wobei die Speichervorrichtung einen flüchtigen Speicher umfasst, wobei die eine oder mehrere Tabellen zeilenbasierte Tabellen sind; wobei das Verfahren ferner umfasst: Speichern der empfangenen gemessenen Daten in einer spaltenbasierten Tabelle und Anzeigen der spaltenbasierten Tabelle.

5. Verfahren nach einem der vorangehenden Ansprüche, wobei das Bereitstellen der einzelnen Werte jedes der mehreren Betriebsparameter ein Anzeigen der mehreren Betriebsparameter in einer Benutzeroberfläche der Empfangseinheit umfasst.

6. Verfahren nach einem der vorangehenden Ansprüche, wobei die dynamisch erzeugte zweite Abfrage mehrere iterative Verbindungsklauseln als eine Funktion der ausgewählten Teilgruppenwerte umfasst.

7. Verfahren nach einem der vorangehenden Ansprüche, wobei die dynamisch erzeugte Abfrage mehrere iterative Verbindungsklauseln als eine Funktion der ausgewählten mehreren Betriebsparameter umfasst.

8. Verfahren nach einem der vorangehenden Ansprüche, wobei die mobile Telekommunikationsvorrichtung eine Berührungsbildschirmvorrichtung mit einem berührungsempfindlichen Anzeigebildschirm umfasst.

9. Verfahren nach Anspruch 1, wobei die mobile Telekommunikationsvorrichtung in einem Standardsicherheitsmodus arbeitet, wobei das Senden des Steuersignals und/oder das Senden der Abfrage ein Schalten der mobilen Telekommunikationsvorrichtung umfasst, damit diese in einem erweiterten Sicherheitsmodus arbeitet, wobei das Steuersignal und/oder die Abfrage als eine Sprachnachricht an den Server gesendet werden.

10. Mobile Telekommunikationsvorrichtung zum Steuern eines Servers eines Telekommunikationssystems, wobei die mobile Telekommunikationsvorrichtung über ein digitales Telekommunikationsnetzwerk mit dem Server verbunden ist, wobei der Server dazu ausgelegt ist, Daten durch Empfangen von Daten, die für eine Vielzahl von Betriebsparametern des Servers bezeichnend sind, von einem Benutzer des Servers und/oder von einer elektrischen Vorrichtung, die von dem Server gesteuert wird, um die Daten zu erfassen, zu sammeln, wobei die Betriebsparameter genutzt werden, um den Betrieb des Servers zu steuern; wobei die Vielzahl von Betriebsparametern in Gruppen von Betriebsparametern aufgeteilt ist; wobei der Server die gesammelten Daten in einer Speichervorrichtung in einer oder mehreren Tabellen, die den Gruppen von Betriebsparametern zugeordnet sind, speichert, wobei die mobile Telekommunikationsvorrichtung umfasst:
- eine Empfangseinheit zum Empfangen einer Anfrage, auf die gesammelten Daten zuzugreifen;
- eine Steuereinheit zum Senden eines Steuerinformationen umfassenden Steuersignals über das digitale Telekommunikationsnetzwerk an den Server, um den Server so zu steuern, dass er die eine oder mehrere Tabellen verarbeitet und eine Liste der Vielzahl von Betriebsparametern erzeugt; wobei die Empfangseinheit die Liste von Betriebsparametern in Reaktion auf das Empfangen der Liste von Betriebsparametern von dem Server bereitstellt; wobei die Empfangseinheit eine Auswahl mehrerer Betriebsparameter aus der Liste von Betriebsparametern empfängt; wobei die Steuereinheit eine die mehreren Betriebsparameter referenzierende Abfrage dynamisch erzeugt, um zu jedem der mehreren Betriebsparameter einzelne Werte zu erhalten; wobei die Steuereinheit die Abfrage an den Server sendet, um die Speichervorrichtung unter Verwendung der Abfrage abzufragen; wobei die Empfangseinheit die einzelnen Werte zu jedem der mehreren Betriebsparameter von dem Server empfängt; wobei die Empfangseinheit die einzelnen Werte zu jedem der mehreren Betriebsparameter bereitstellt; wobei die Empfangseinheit eine Auswahl einer Teilgruppe von Werten der einzelnen Werte zu jedem der mehreren Betriebsparameter empfängt; und
- eine Analyseeinheit zum Steuern des Servers, damit dieser entsprechend der Teilgruppe von Werten der einzelnen Werte zu jedem der mehreren Betriebsparameter arbeitet, wobei die mehreren Betriebsparameter ein Energieverbrauchsniveau umfassen, wobei einzelne Werte des Energieverbrauchsniveaus Energieverbrauchsniveaus entsprechender einzelner Komponenten des Servers umfassen, wobei das Steuern des Servers, damit dieser entsprechend der Teilgruppe von Werten der einzelnen Werte jedes der mehreren Betriebsparameter arbeitet, umfasst: dynamisches Erzeugen einer die Teilgruppe von Werten der einzelnen Werte jedes der mehreren Betriebsparameter referenzierenden zweiten Abfrage; Senden der zweiten Abfrage an den Server; Empfangen gemessener Daten der Teilgruppe von Werten der einzelnen Werte zu jedem der mehreren Betriebsparameter, wobei jeder aus der Teilgruppe von Werten unter Verwendung der gemessenen Daten angepasst wird; Steuern des Servers, damit dieser entsprechend der angepassten Teilgruppe von Werten arbeitet, wobei die angepasste Teilgruppe von Werten ein maximal zulässiges Energieverbrauchsniveau, bei dem der Server arbeiten kann, umfasst, wobei die einzelnen Werte das Energieverbrauchsniveau der Anzeige des Servers und das Energieverbrauchsniveau des Speichers des Servers umfassen, wobei die ausgewählte Teilgruppe von Werten das Energieverbrauchsniveau der Anzeige umfasst, wobei die empfangenen gemessenen Daten das durchschnittliche Energieverbrauchsniveau der Anzeige für einen vordefinierten Zeitraum und/oder das maximale Energieverbrauchsniveau der Anzeige für den vordefinierten Zeitraum umfassen, wobei das Energieverbrauchsniveau der Anzeige durch Verringern des maximal zulässigen Energieverbrauchsniveaus der Anzeige angepasst wird, wobei der Server gesteuert wird, um entsprechend dem neuen maximal zulässigen Energieverbrauchsniveau der Anzeige durch Reduzieren der Helligkeit der Anzeige des Servers während des vordefinierten Zeitraums zu arbeiten.

## Revendications

1. Procédé de communication permettant de commander un serveur (911) d'un système de télécommunication (99), le système de télécommunication (99) comprenant un dispositif de télécommunication mobile (900) étant connecté au serveur (911) par le biais d'un réseau de télécommunication numérique (913), le serveur étant conçu pour collecter des données en réceptionnant des données indicatrices d'une pluralité de paramètres opérationnels du serveur à partir d'un utilisateur du serveur et/ou à partir d'un dispositif électrique qui est commandé par le serveur pour acquérir des données, où les paramètres opérationnels sont utilisés pour commander le fonctionnement du serveur, le dispositif de télécommunication mobile (900) comprenant une unité de réception (933), une unité de commande (935) et une unité d'analyse (937), le procédé de communication comprenant :
- la division de la pluralité des paramètres opératoires en ensembles de paramètres opérationnels ;
- le stockage, par le serveur, dans un dispositif de stockage, des données collectées dans une ou plusieurs tables associées avec les ensembles de paramètres opérationnels ;
- la réception, par l'unité de réception, d'une requête pour accéder aux données collectées ;
- l'envoi, par l'unité de commande, d'un signal de commande comprenant une information de commande par le biais du réseau de télécommunication numérique au serveur pour commander le serveur pour qu'il traite la table ou des tables et génère une liste de la pluralité des paramètres opérationnels ;
- en réponse à la réception, par l'unité de réception, de la liste des paramètres opérationnels à partir du serveur, la fourniture, par l'unité de réception, de la liste de paramètres opérationnels ;
- la réception, par l'unité de réception, d'une sélection de multiples paramètres opérationnels de la liste des paramètres opérationnels ;
- la génération de manière dynamique, par l'unité de commande, d'une requête faisant référence aux multiples paramètres opérationnels pour obtenir des valeurs distinctes de chacun des multiples paramètres opérationnels ;
- l'envoi, par l'unité de commande, de la requête au serveur pour requérir au dispositif de stockage utilisant la requête ;
- la réception, par l'unité de réception, des valeurs distinctes de chacun parmi les multiples paramètres opérationnels provenant du serveur ;
- la fourniture, par l'unité de réception, des valeurs distinctes de chacun parmi les multiples paramètres opérationnels provenant du serveur ;
- la réception, par l'unité de réception, d'une sélection d'un sous-ensemble de valeurs parmi les valeurs distinctes de chacun parmi les multiples paramètres opérationnels ;
- la commande, par l'unité d'analyse, pour que le serveur fonctionne en accord avec le sous-ensemble de valeurs parmi les valeurs distinctes de chacun des multiples paramètres opérationnels,
dans lequel les multiples paramètres opérationnels comprennent un niveau de consommation d'énergie, où des valeurs distinctes du niveau de consommation d'énergie comprennent des niveaux de consommation d'énergie de composants distincts respectifs du serveur, où la commande du serveur pour qu'il fonctionne en accord avec le sous-ensemble de valeurs parmi les valeurs distinctes de chacun parmi les multiples paramètres opérationnels comprend : la génération de manière dynamique d'une deuxième requête faisant référence au sous-ensemble de valeurs parmi les valeurs distinctes de chacun parmi les multiples paramètres opérationnels ; l'envoi de la deuxième requête au serveur ; la réception de données du sous-ensemble de valeurs parmi les valeurs distinctes de chacun parmi les multiples paramètres opérationnels, l'ajustement de chacune parmi le sous-ensemble de valeurs en utilisant les données mesurées ; la commande du serveur pour qu'il fonctionne en accord avec le sous-ensemble de valeurs ajusté, où le sous-ensemble de valeurs ajusté comprend un niveau de consommation d'énergie maximal permis en-dessous duquel le serveur peut fonctionner, les valeurs distinctes comprenant le niveau de consommation d'énergie de l'affichage du serveur et le niveau de consommation d'énergie du stockage du serveur, le sous-ensemble sélectionné de valeurs comprenant le niveau de consommation d'énergie de l'affichage, où la donnée mesurée reçue comprend le niveau de consommation d'énergie moyen de l'affichage pour un intervalle de temps prédéfini et/ou le niveau de consommation d'énergie maximal de l'affichage pour un intervalle de temps prédéfini, où le niveau de consommation d'énergie de l'affichage est ajusté en diminuant le niveau de consommation d'énergie maximal permis de l'affichage, où le serveur est commandé pour qu'il fonctionne en accord avec le nouveau niveau de consommation maximal permis de l'affichage par la réduction de la luminosité de l'affichage du serveur pendant l'intervalle de temps prédéfini.

2. Procédé selon l'une quelconque des revendications précédentes, dans lequel l'unité de réception comprend une interface à canal vocal, où la requête pour accéder aux données collectées est reçue sous forme d'un premier message vocal par le biais de l'interface à canal vocal, où un deuxième message vocal est généré par l'unité de commande en utilisant le premier message vocal, le deuxième message vocal indiquant l'information de commande du signal de commande, où l'interface à canal vocal est conçue pour établir un canal vocal avec le serveur, l'envoi du signal de commande comprend l'envoi du deuxième message vocal par le biais du canal vocal établi.

3. Procédé selon l'une quelconque des revendications précédentes, dans lequel le système de télécommunication comprend un système de télécommunication cellulaire qui comporte une ou deux stations de base, où le signal de commande est envoyé par le biais d'une station de base parmi la station ou les stations de base.

4. Procédé selon l'une quelconque des revendications précédentes, dans lequel le dispositif de stockage comprend une mémoire volatile, où la ou les tables sont des tables à base de rangées ; le procédé comprenant en outre : le stockage de la donnée mesurée reçue dans une table à base de colonnes et l'affichage de la table à base de colonnes.

5. Procédé selon l'une quelconque des revendications précédentes, dans lequel les valeurs distinctes de chacun des multiples paramètres opérationnels comprend l'affichage des multiples paramètres opérationnels dans une interface utilisateur de l'unité de réception.

6. Procédé selon l'une quelconque des revendications précédentes, dans lequel la requête générée de manière dynamique comprend des clauses de jointure itératives multiples sous forme d'une fonction des valeurs de sous-ensemble choisies.

7. Procédé selon l'une quelconque des revendications précédentes, dans lequel la requête générée de manière dynamique comprend des clauses de jointure itératives multiples sous forme d'une fonction des multiples paramètres opérationnels

8. Procédé selon l'une quelconque des revendications précédentes, dans lequel le dispositif de télécommunication mobile comprend un dispositif à écran tactile ayant un écran d'affichage tactile.

9. Procédé selon la revendication 1, le dispositif de télécommunication mobile fonctionnant dans un mode de sécurité par défaut, où l'envoi du signal de commande et/ou l'envoi de la requête comprend la commutation du dispositif de télécommunication mobile pour qu'il fonctionne dans un mode de sécurité améliorée en envoyant ainsi le signal de commande et/ou la requête sous forme d'un message vocal au serveur.

10. Dispositif de télécommunication mobile pour commander un serveur d'un système de télécommunication, le dispositif de télécommunication mobile étant connecté au serveur connecté par le biais d'un réseau de télécommunication numérique du, le serveur étant conçu pour collecter des données en réceptionnant des données indicatrices d'une pluralité de paramètres opérationnels du serveur à partir d'un utilisateur du serveur et/ou à partir d'un dispositif électrique qui est commandé par le serveur pour acquérir des données, où les paramètres opérationnels sont utilisés pour commander le fonctionnement du serveur, la pluralité des paramètres opérationnels étant divisée en ensembles de paramètres opérationnels, où le serveur stocke les données collectées dans un dispositif de stockage dans une ou plusieurs tables associées avec les ensembles de paramètres opérationnels, le dispositif de télécommunication mobile comprend :
- une unité de réception pour recevoir une requête pour accéder aux données collectées ;
- une unité de commande pour envoyer un signal de commande comprenant une information de commande par le biais du réseau de télécommunication numérique au serveur pour commander au serveur de traiter la ou les tables et générer une liste de la pluralité des paramètres opérationnels ; l'unité de réception fournissant la liste des paramètres opérationnels en réponse à la réception de la liste des paramètres opérationnels à partir du serveur, l'unité de réception recevant une sélection de multiples paramètres opérationnels de la liste de paramètres opérationnels ; l'unité de commande générant de manière dynamique une requête faisant référence aux multiples paramètres opérationnels pour obtenir des valeurs distinctes de chacun des multiples paramètres ; l'unité de commande envoyant la requête au serveur pour demander au dispositif de stockage d'utiliser la requête ; l'unité de réception recevant les valeurs distinctes de chacun des multiples paramètres opérationnels à partir du serveur ; l'unité de réception fournissant les valeurs distinctes de chacun des multiples paramètres opérationnels ; l'unité de réception recevant une sélection d'un sous-ensemble de valeurs parmi les valeurs distinctes de chacun des multiples paramètres opérationnels ; et
- une unité d'analyse pour commander au serveur de fonctionner en accord avec le sous-ensemble de valeurs parmi les valeurs distinctes de chacun des multiples paramètres opérationnels, où les multiples paramètres opérationnels comprennent un niveau de consommation d'énergie, où des valeurs distinctes du niveau de consommation d'énergie comprennent des niveaux de consommation d'énergie de composants distincts respectifs du serveur, où la commande du serveur pour qu'il fonctionne en accord avec le sous-ensemble de valeurs parmi les valeurs distinctes de chacun parmi les multiples paramètres opérationnels comprend : la génération de manière dynamique d'une deuxième requête faisant référence au sous-ensemble de valeurs parmi les valeurs distinctes de chacun parmi les multiples paramètres opérationnels ; l'envoi de la deuxième requête au serveur ; la réception de données du sous-ensemble de valeurs parmi les valeurs distinctes de chacun parmi les multiples paramètres opérationnels, l'ajustement de chacune parmi le sous-ensemble de valeurs en utilisant les données mesurées ; la commande du serveur pour qu'il fonctionne en accord avec le sous-ensemble de valeurs ajusté, où le sous-ensemble de valeurs ajusté comprend un niveau de consommation d'énergie maximal permis en-dessous duquel le serveur peut fonctionner, les valeurs distinctes comprenant le niveau de consommation d'énergie de l'affichage du serveur et le niveau de consommation d'énergie du stockage du serveur, le sous-ensemble sélectionné de valeurs comprenant le niveau de consommation d'énergie de l'affichage, où la donnée mesurée reçue comprend le niveau de consommation d'énergie moyen de l'affichage pour un intervalle de temps prédéfini et/ou le niveau de consommation d'énergie maximal de l'affichage pour un intervalle de temps prédéfini, où le niveau de consommation d'énergie de l'affichage est ajusté en diminuant le niveau de consommation d'énergie maximal permis de l'affichage, où le serveur est commandé pour qu'il fonctionne en accord avec le nouveau niveau de consommation maximal permis de l'affichage par la réduction de la luminosité de l'affichage du serveur pendant l'intervalle de temps prédéfini.
